# EUROPÄISCHE PATENTSCHRIFT

(11) **EP 2 745 696 B1**
(45) Veröffentlichungstag und Bekanntmachung des Hinweises auf die Patenterteilung: **15.01.2020**
(21) Anmeldenummer: 13401126.1
(22) Anmeldetag: 03.12.2013
(51) Int. Cl.: A21B 3/04, F24C 7/08

(54) **GARGERÄT UND VERFAHREN ZUM BETREIBEN EINES GARGERÄTES**
COOKING DEVICE AND METHOD FOR OPERATING A COOKING DEVICE
APPAREIL DE CUISSON ET PROCÉDÉ DE FONCTIONNEMENT D'UN APPAREIL DE CUISSON

(30) Priorität: 20.12.2012 DE 102012112810
(43) Veröffentlichungstag der Anmeldung: 25.06.2014
(73) Patentinhaber: Miele & Cie. KG, 33332 Gütersloh (DE)
(72) Erfinder: Metz, Thomas, 32257 Bünde (DE)

(56) Entgegenhaltungen:
- EP-A1- 2 327 934
- EP-A1- 2 469 191
- EP-A2- 0 534 809
- EP-A2- 2 428 735

## Beschreibung

Die vorliegende Erfindung betrifft ein Gargerät und ein Verfahren zum Betreiben eines Gargeräts, wobei das Gargerät wenigstens einen Garraum aufweist, der wenigstens im Wesentlichen über wenigstens eine dem Garraum zugeordnete Dampfquelle beheizbar ist. Insbesondere betrifft die Erfindung ein Dampfgargerät, welches wenigstens auch im Wesentlichen über wenigstens eine dem Garraum zugeordnete Dampfquelle beheizbar ist. Ein solches als Dampfgargerät ausgeführtes Gargerät kann neben einer oder mehrerer Dampfquellen auch noch weitere konventionelle Heizquellen aufweisen.

Typische Gargeräte, die über wenigstens eine dem Garraum zugeordnete Dampfquelle beheizbar sind und insbesondere Dampfgargeräte sind in der Regel drucklos arbeitende Geräte, bei denen der Garraum ständig in Druckaustausch mit der Umgebung steht. Bei solchen Gargeräten wird dem Garraum entweder über eine in dem Garraum angeordnete Dampfquelle bei Bedarf Dampf zugeführt oder aber es ist wenigstens eine Dampfquelle außerhalb des Garraumes vorgesehen, die über eine entsprechende Dampfzuführleitung Dampf in das Innere des Garraumes leitet.

Im Stand der Technik sind Gargeräte bzw. Dampfgargeräte bekannt geworden, bei denen die Beheizung des Gargerätes teilweise oder sogar vollständig über eine Dampfquelle erfolgt, die dem Garraum beispielsweise 100°C heißen Dampf zuführt. Die genaue Dampftemperatur hängt bei solchen offenen Systemen vom herrschenden Umgebungsdruck ab, der insbesondere von der geodätischen Höhenlage eines solchen Dampfgargerätes abhängt.

Ein gattungsgemäßes Dampfgargerät ist aus der Druckschrift EP 2 469 191 A1 bekannt. Weiterhin zeigt auch die Druckschrift EP 2 428 735 A2 ein Dampfgargerät, mit den Merkmalen des Oberbegriffes der Ansprüche 1 und 11.Drucklos arbeitende Dampfgargeräte für den Einsatz in der Küche weisen oft eine Dampfeinlassöffnung in den Garraum sowie eine Auslassöffnung auf, durch den überschüssiger Dampf den Garraum verlassen kann. Über die Auslassöffnung erfolgt ein Gasaustausch mit der Umgebung. Herrscht in dem Garraum durch kondensierenden Dampf bedingt ein Unterdruck vor, so wird beispielsweise über die Auslassöffnung Luft aus der Umgebung des Garraumes und des Gargerätes in den Garraum hineingesogen. Wird hingegen zu viel Dampf in den Garraum geleitet oder dort produziert, so tritt überschüssiger Dampf aus der Auslassöffnung aus.

Damit aus dem Gargerät während des Betriebes nicht zu viel Dampf austritt und es somit zu einer unerwünschten Befeuchtung der Umgebung des Gargerätes kommt, werden Garprozesse mit solchen Dampfgargeräten in der Regel über einen Temperaturfühler geregelt. Eine solche Regelung trägt auch zur besseren Energieeffizienz bei. Der Temperaturfühler wird in dem Garraum angeordnet und erfasst die dort vorherrschende Temperatur. Wenn die detektierte Temperatur geringer als die gewünschte Temperatur ist, wird die Heizquelle aktiviert, um Dampf in dem Garraum zu produzieren oder aber in den Garraum einzuleiten. Wenn die gewünschte Temperatur erreicht oder überschritten wird, wird die Dampfquelle ausgeschaltet.

Derartige bekannte Gargeräte und Dampfgargeräte funktionieren zufriedenstellend. Oftmals wird die Temperatur in dem Garraum auf eine Temperatur von etwa 90°C eingeregelt, damit der Austritt von überschüssigem Dampf zuverlässig vermieden wird. Dadurch wird beim Aufheizen ein Überschwingen mit überschüssigem Dampfaustritt vermieden.

Nachteilig an den bekannten Gargeräten und Garverfahren ist aber, dass die angestrebte Solltemperatur erheblich unter der maximalen Solltemperatur liegt. Da Garprozesse mit steigender Temperatur schneller ablaufen, führen die bekannten Gargeräte die entsprechenden Garverfahren mit einem langsameren Garprozess aus als eigentlich nötig wäre. Außerdem wird die eingestellte Gartemperatur nicht konstant eingehalten, sondern unterliegt erheblichen Schwankungen.

Es ist deshalb die Aufgabe der vorliegenden Erfindung ein Gargerät und ein Verfahren zum Betreiben eines Gargerätes zur Verfügung zu stellen, womit eine bessere Einhaltung einer vorgegebenen Gartemperatur ermöglicht wird.

Diese Aufgabe wird gelöst durch ein Gargerät mit den Merkmalen des Anspruchs 1 und durch ein Verfahren zum Betreiben eines Gargeräts mit den Merkmalen des Anspruchs 10. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung eines Ausführungsbeispiels.

Ein erfindungsgemäßes Gargerät verfügt über wenigstens einen Garraum, der über wenigstens eine dem Garraum zugeordnete Dampfquelle beheizbar ist. Es ist wenigstens ein Temperaturfühler zur Erfassung einer Temperatur vorgesehen. Wenigstens eine Steuereinrichtung dient zur Steuerung der Dampfquelle in Abhängigkeit von der erfassten Temperatur des Temperaturfühlers. Die Steuereinrichtung ist dazu geeignet und ausgebildet, eine Heizleistung der Dampfquelle in Abhängigkeit von der Temperatur des Temperaturfühlers zu verändern. Dabei ist die Steuereinrichtung dazu eingerichtet und ausgebildet, die Heizleistung der Dampfquelle um ein erstes Maß zu verringern, wenn die von dem Temperaturfühler erfasste Temperatur eine vorgegebene erste Schwelltemperatur überschreitet. Die Steuereinrichtung ist dazu eingerichtet und ausgebildet, die Heizleistung der Dampfquelle um ein gegenüber dem ersten Maß unterschiedliches zweites Maß zu erhöhen, wenn die von dem Temperaturfühler erfasste Temperatur eine vorgegebene zweite Schwelltemperatur unterschreitet.

Das erfindungsgemäße Gargerät hat viele Vorteile, da es eine feinfühlige Reaktion auf Temperaturveränderungen ermöglicht. Dadurch, dass bei einer Überschreitung einer vorgegebenen ersten Schwelltemperatur die Heizleistung um ein erstes Maß verringert wird, während bei Unterschreitung einer vorgegebenen zweiten Schwelltemperatur die Heizleistung um ein unterschiedliches zweites Maß erhöht wird, kann der Garprozess und das Verfahren zum Betreiben des Gargerätes auf die vorliegende Vorrichtung angepasst und eingestellt werden. Durch die Erfindung wird es möglich, die Trägheit des Prozesses und der unterschiedlichen Komponenten zu berücksichtigen und auszugleichen, so dass eine bessere Einhaltung der vorgegebenen Gartemperatur ermöglicht wird.

Sollte beispielsweise die Dampfquelle träge auf eine Erhöhung der Heizleistung reagieren, so kann das entsprechend berücksichtigt werden. Reagiert die Dampfquelle aber entsprechend träger auf eine Reduktion der Heizleistung, so kann auch dies über eine Anpassung des ersten und des zweiten Maßes berücksichtigt werden.

Eine Heizleistung ergibt sich insbesondere als zeitlicher Mittelwert der Energiezufuhr über einen definierten Zeitraum. Beispielsweise kann das erste und/oder zweite Maß die kontinuierliche Heizleistung ergeben, die an die entsprechende Heizquelle angelegt wird. Möglich ist es aber auch, dass das erste und/oder das zweite Maß sich als Mittelwert eines getakteten Betriebes ergeben. Beispielsweise kann im Bereich von einigen Sekunden oder darunter die Heizleistung einer Heizquelle getaktet betrieben werden. Beispielsweise kann ein elektrischer Heizkörper getaktet mit maximaler Heizleistung und ausgeschaltet betrieben werden, so dass sich gemittelt über Zeiträume, die kurz im Vergleich zum gesamten Garzeitraum sind, eine mittlere Heizleistung einstellt.

Möglich ist es aber auch, dass zur Variation der Heizleistung Teilbereiche einer Heizeinrichtung zu- oder abgeschaltet werden, oder aber, dass unterschiedliche Heizeinheiten der Heizeinrichtung mit unterschiedlichen Taktungen betrieben werden. Möglich ist auch eine kontinuierliche Steuerung der Heizleistung.

Erfindungsgemäß ist das zweite Maß größer als das erste Maß. Insbesondere ist das zweite Maß wenigstens 25 % und vorzugsweise wenigstens 50 % größer als das erste Maß. Möglich ist es auch, dass das zweite Maß ein Vielfaches oder etwa ein Vielfaches des ersten Maßes beträgt. Ein zweites Maß als Erhöhungsmaß der Heizleistung, welches größer als ein erstes Maß als Verringerungsmaß ist, hat viele Vorteile. Wird von dem Temperaturfühler eine Temperatur erfasst, die unterhalb der vorgegebenen zweiten Schwelltemperatur liegt, wird die Heizleistung demnach um ein größeres Maß erhöht, als das Maß, um welches sie verringert wird, wenn die von dem Temperaturfühler erfasste Temperatur oberhalb der vorgegebenen ersten Schwelltemperatur liegt. Eine solche Ausgestaltung bietet den Vorteil, dass bei Unterschreiten der vorgegebenen Temperatur zügig die Heizleistung erhöht wird, um Trägheiten innerhalb der Dampfquelle auszugleichen.

In allen Ausgestaltungen ist es bevorzugt, dass die Heizleistung stufenweise verändert wird. Eine solche Ausgestaltung ist einfach und kostengünstig umzusetzen. Vorzugsweise wird bei dieser Ausgestaltung die Heizleistung der Dampfquelle um zwei oder mehr Stufen vergrößert, wenn sie vergrößert werden soll. Hingegen wird die Heizleistung der Dampfquelle vorzugsweise nur um eine Stufe verringert, wenn sie verringert werden soll. Dadurch kann eine erheblich genauere Einhaltung der vorgegebenen Garraumtemperatur erzielt werden.

Möglich ist es natürlich auch, dass die Heizleistung stufenlos verändert wird, wobei die Heizleistung vorzugsweise entsprechend mehr vergrößert wird, wenn sie vergrößert werden soll, als wenn sie verringert werden soll.

In allen Ausgestaltungen ist an dem Garraum erfindungsgemäß wenigstens eine Auslassöffnung vorgesehen, über welche der Garraum direkt oder indirekt mit der Umgebung in Verbindung steht. Bei solchen Ausgestaltungen ist das Gargerät als druckloses Gerät ausgeführt. Durch die Auslassöffnung kann überschüssiger Dampf aus dem Garraum nach außen entweichen. Durch die Auslassöffnung kann im Gegenzuge auch Luft aus der Umgebung des Garraumes und aus der Umgebung des Gargerätes in den Garraum eintreten, wenn die Dampfproduktion nicht ausreicht und in dem Garraum ein Unterdruck entsteht.

Erfindungsgemäß ist der Temperaturfühler in dem Strömungsweg eines durch die Auslassöffnung durchtretenden Garstromes angeordnet. Eine solche Ausgestaltung ist besonders vorteilhaft, da eine besonders feinfühlige Reaktion des Temperaturfühlers ermöglicht wird. Tritt überschüssiger Dampf aus dem Garraum nach außen, so wird der Temperaturfühler, der nun in dem Strömungsweg des durch die Auslassöffnung nach außen durchtretenden Dampfstromes angeordnet ist, durch den heißen Dampf mit der entsprechend erhöhten Temperatur beaufschlagt, so dass der Temperaturfühler die Temperatur des austretenden Dampfes schnell erreicht.

Reicht die Dampfproduktion der Dampfquelle hingegen nicht aus, so entsteht in dem Garraum ein Unterdruck, durch den Luft aus der Umgebung des Garraumes nach innen gesogen wird. In diesem Fall ist der Temperaturfühler wiederum in dem Strömungsweg des durch die Auslassöffnung nach innen eintretenden Umgebungsluftstromes angeordnet. Dadurch erfasst der Temperaturfühler schnell die geringere Temperatur des in den Garraum eintretenden Gasstromes. Dadurch reagiert der Temperaturfühler sehr feinfühlig auf die Temperatur eines ein- oder austretenden Gasstromes. Diese Ausgestaltung ermöglicht eine besonders genaue Temperatureinhaltung in dem Garraum. Dabei ist es nicht nötig, dass der Temperaturfühler die Temperatur in dem Garraum erfasst. Wesentlich ist, dass der Temperaturfühler Temperaturänderungen in dem Garraum detektiert. Liegt ein Dampfüberschuss im Garraum vor, so detektiert der Temperaturfühler wenigstens teilweise die Temperatur des austretenden Dampfes und bei einem Dampfmangel wenigstens teilweise die Temperatur der eintretenden Umgebungsluft.

Möglich ist es, dass der Temperaturfühler exakt in der Auslassöffnung angeordnet ist. Möglich ist es aber auch, dass der Temperaturfühler innerhalb oder auch außerhalb des Garraumes angeordnet ist. Gemäß der Erfindung ist der Temperaturfühler in dem Strömungsweg eines durch die Auslassöffnung durchtretenden Gasstromes angeordnet, da dadurch eine hohe Sensitivität des Temperaturfühlers gewährleistet wird. Tatsächlich kommt es nicht so sehr darauf an, dass der Temperaturfühler genau in der Auslassöffnung angeordnet ist. Vorteilhaft kann auch eine Anordnung nahe der Auslassöffnung, aber etwas außerhalb des Garraumes sein, da sich dort als natürliche Temperatur eine Temperatur zwischen der Umgebungstemperatur und der Garraumtemperatur einstellen wird. Bei austretendem überschüssigen Dampf ändert sich diese Temperatur schnell, während gleichzeitig bei angesaugter Umgebungsluft diese Temperatur großen Änderungen unterliegt.

In vorteilhaften Ausgestaltungen ist eine gemeinsame Baueinheit vorgesehen, an der wenigstens der Temperaturfühler und die Auslassöffnung(en) vorgesehen sind. Eine solche gemeinsame Baueinheit kann insbesondere an der Rückwand des Garraums angeordnet werden. Eine solche Baueinheit ermöglicht eine Vorjustage des Temperaturfühlers in Bezug auf die Auslassöffnung, so dass jederzeit definierte Bedingungen gewährleistet werden können. Außerdem vereinfacht eine solche gemeinsame Baueinheit die Endmontage.

Vorteilhafterweise ist an einer solchen gemeinsamen Baueinheit wenigstens eine Dampfeinlassöffnung vorgesehen. Bei einer solchen Ausgestaltung kann wenigstens eine Dampfquelle außerhalb des Garraumes vorgesehen sein. Durch die Dampfeinlassöffnung wird im Bedarfsfalle Dampf in den Garraum eingeleitet. Möglich ist es aber auch, dass wenigstens eine Dampfquelle innerhalb des Garraumes angeordnet ist. Beispielsweise kann eine solche Dampfquelle am Garraumboden vorgesehen sein und derart angeordnet sein, dass an den Wänden kondensierender Dampf wieder in das Reservoir der Dampfquelle hineingeleitet wird.

Bei allen Ausgestaltungen ist oftmals die Trägheit beim Aufheizen größer als bei der Reduktion der Heizleistung. In diesen Fällen hat sich die Erhöhung um ein größeres Maß als besonders vorteilhaft erwiesen. Möglich ist es aber beispielsweise auch, dass ein Druckbehälter zur Verfügung steht, in dem Dampf bevorratet ist, so dass zur Vergrößerung der Heizleistung nur ein Ventil entsprechend geöffnet werden muss. In solchen Ausgestaltungen kann es auch vorteilhaft sein, wenn eine geplante Verringerung der Heizleistung in einem größeren Schritt erfolgt als eine Erhöhung der Heizleistung.

Bei dem erfindungsgemäßen Verfahren zum Betreiben eines Gargerätes weist das Gargerät wenigstens einen Garraum und wenigstens eine dem Garraum zugeordnete Dampfquelle auf. Über einen Temperaturfühler wird eine Temperatur erfasst. Mit einer Steuereinrichtung wird die Dampfquelle in Abhängigkeit von der Temperatur des Temperaturfühlers gesteuert. Eine Heizleistung der Dampfquelle wird in Abhängigkeit von der Temperatur des Temperaturfühlers verändert. Dabei verringert die Steuereinrichtung die Heizleistung der Dampfquelle um ein erstes Maß, wenn die Temperatur des Temperaturfühlers eine vorgegebene erste Schwelltemperatur übersteigt. Die Heizleistung der Dampfquelle wird um ein gegenüber dem ersten Maß unterschiedliches zweites Maß erhöht, wenn die Temperatur des Temperaturfühlers eine vorgegebene zweite Schwelltemperatur unterschreitet.

Erfindungsgemäß ist das zweite Maß größer als das erste Maß und insbesondere ist das zweite Maß um ein Vielfaches größer als das erste Maß.

Die Steuereinrichtung verändert die Heizleistung der Dampfquelle vorzugsweise stufenweise. Dabei kann die Erhöhung der Heizleistung der Dampfquelle um wenigstens zwei Stufen erfolgen. Hingegen kann die Heizleistung der Dampfquelle nur um eine Stufe verringert werden, wenn die Heizleistung verringert werden soll. Das Gleiche gilt für entsprechende Vielfache. Besonders bevorzugt wird die Heizleistung der Dampfquelle um wenigstens eine Stufe mehr erhöht, als die Heizleistung der Dampfquelle verringert wird. In allen Fällen kann die Heizleistung der Dampfquelle auch stufenlos verändert werden.

Gemäß einem Beispiel, das nicht Teil der Erfindung ist, kann die erste Schwelltemperatur gleich der zweiten Schwelltemperatur sein. Gemäß der Erfindung unterscheiden sich die erste Schwelltemperatur und zweite Schwelltemperatur, wobei eine feste Differenz vorgesehen sein kann.

Es ist möglich, dass die erste Schwelltemperatur größer ist als die zweite Schwelltemperatur. Es ist aber auch möglich, dass die erste Schwelltemperatur kleiner ist als die zweite Schwelltemperatur. Beispielsweise kann die Heizleistung der Dampfquelle erhöht werden, wenn schon eine geringe Abweichung von der ersten Schwelltemperatur detektiert wird. Dadurch, dass die Dampfquelle oftmals relativ träge arbeitet, kann die erfasste Temperatur des Temperaturfühlers auch nach der Erhöhung der Heizleistung noch weiter absinken. Erst wenn die Trägheit der Dampfquelle überwunden wurde, kann die von dem Temperaturfühler erfasste Temperatur wieder ansteigen. Registriert die Steuereinrichtung nun einen Temperaturanstieg des Temperaturfühlers, kann die Heizleistung schon wieder reduziert werden. Das kann sogar schon dann erfolgen, wenn die erfasste Temperatur noch unterhalb der ersten Schwelltemperatur liegt.

Möglich ist es auch, dass mehrere Temperaturschwellwerte vorgesehen sind, bei denen jeweils unterschiedliche Erhöhungen oder Verringerungen der Heizleistung vorgenommen werden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine schematische Vorderansicht eines erfindungsgemäßen Gargerätes;
- Figur 2: eine vergrößerte schematische Vorderansicht der gemeinsamen Baueinheit des Gargeräts gemäß Figur 1;
- Figur 3: eine stark schematische Querschnittsansicht des Gargeräts gemäß Figur 1;
- Figur 4: eine geschnittene Draufsicht auf das Gargerät gemäß Figur 1;
- Figur 5: den Verlauf der Garraumtemperatur, der erfassten Temperatur und der Heizleistung über der Zeit; und
- Figur 6: den Verlauf der Garraumtemperatur, der erfassten Temperatur und der Heizleistung über einen kurzen Zeitraum.

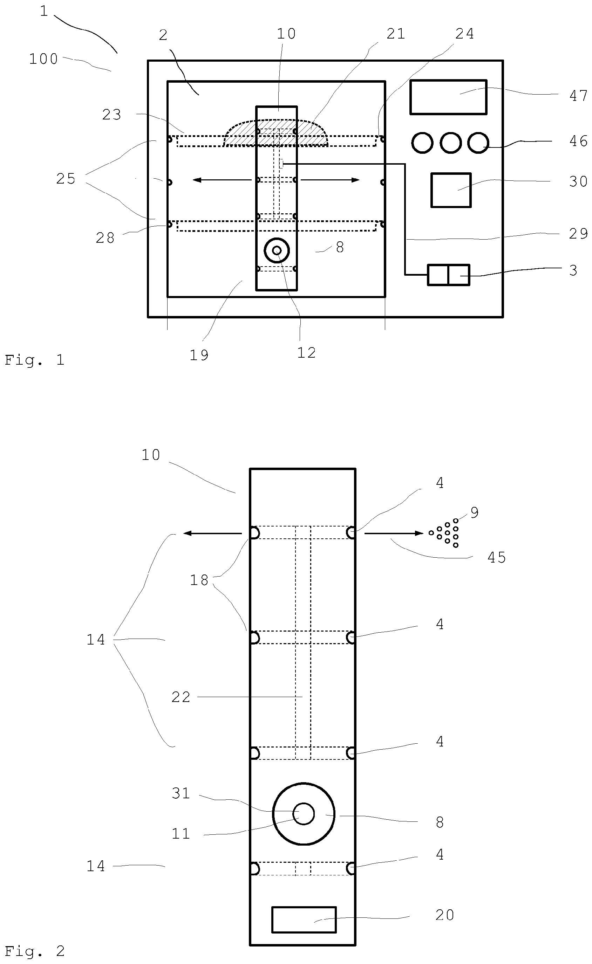

Mit Bezug auf die beiliegenden Figuren 1 bis 6 wird im Folgenden ein Ausführungsbeispiel eines erfindungsgemäßen Gargeräts 1 beschrieben, welches hier als Dampfgargerät 100 ausgeführt ist und welches sowohl als Einbaugerät als auch als alleinstehendes Gargerät ausgebildet sein kann.

In Figur 1 ist das Gargerät 1 in einer stark schematischen und vereinfachten Darstellung abgebildet. Das Gargerät 1 weist einen Garraum 2 auf, der wenigstens teilweise über Dampf wenigstens einer Dampfquelle 3 beheizbar ist. Dabei kann die Dampfquelle 3, wie in Figur 1 angedeutet, über mehrere Heizquellen verfügen, die nach Bedarf einzeln oder auch gesamt ansteuerbar sind.

Die Dampfquelle 3 leitet den erzeugten Dampf 9 (vgl. Figur 2) über Dampfeinlassöffnungen 4 in den Garraum 2 ein. Eine zentrale Auslassöffnung 8 ist mit der Umgebung 50 des Gargerätes 1 verbunden, so dass das Gargerät 1 bzw. das Dampfgargerät 100 als drucklos arbeitendes System ausgeführt ist. Durch die Auslassöffnung 8 kann überschüssiger Dampf 9 aus dem Inneren des Garraums 2 nach außen abgeführt werden. Oder es wird Luft aus der Umgebung 50 angesaugt, wenn im Inneren des Garraums 2 ein Unterdruck vorherrscht, wenn dort beispielsweise vorhandener Dampf 9 kondensiert und nicht genug Dampf 9 durch die Dampfquelle 3 nachgeliefert wird. Es können auch mehrere Dampfauslassöffnungen 8 vorgesehen sein.

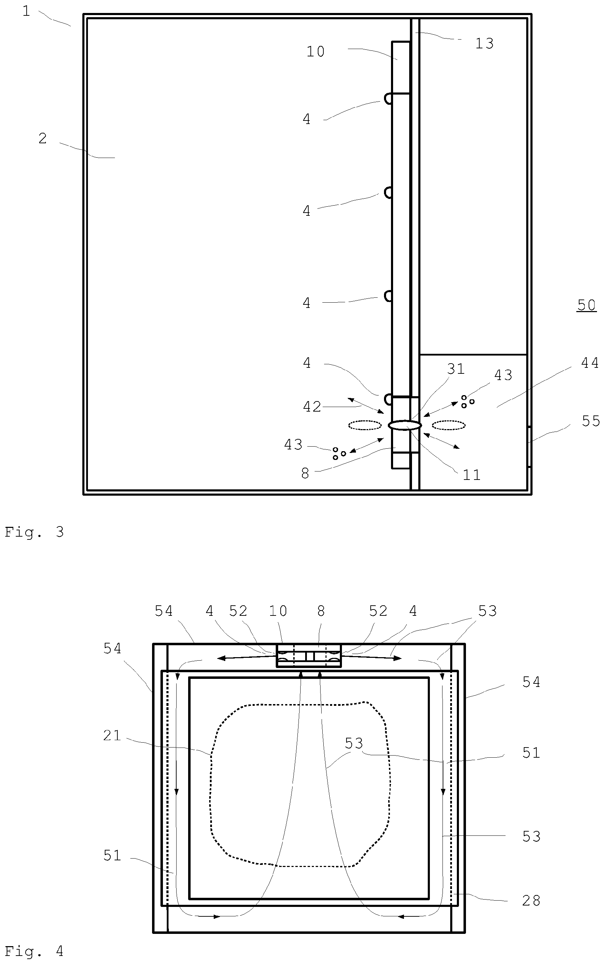

Figur 2 zeigt die gemeinsame Baueinheit 10 in vergrößerter Darstellung, die an der Rückwand 13 (vgl. Fig. 3) des Garraumes 2 austauschbar angeordnet ist. An der gemeinsamen Baueinheit 10 sind hier die insgesamt acht Dampfeinlassöffnungen 4 vorgesehen, die auf vier Ebenen 14 jeweils paarweise angeordnet sind. Jeweils zwei Dampfeinlassöffnungen 4 sind paarweise an der Baueinheit 10 vorgesehen und sind so ausgebildet, dass der aus dem Dampfeinlassöffnungen 4 austretender Dampf 9 in etwa entgegengesetzte Richtungen gelenkt wird, wie die eingezeichneten Strahlrichtungen 45 an den Dampfeinlassöffnungen 4 zeigen. Jeweils zwei Dampfeinlassöffnungen 4 sind auf jeder Ebene 14 vorgesehen.

Die Auslassöffnung 8 ist hier zentral zwischen der untersten und der zweituntersten Ebene angeordnet.

Zentrisch ist innerhalb der Auslassöffnung 8 eine Sensoreinrichtung 31 angeordnet, die einen Temperaturfühler 11 umfasst. Durch die Anordnung des Temperaturfühlers 11 innerhalb der Auslassöffnung 8 wird sichergestellt, dass durch die Auslassöffnung 8 strömendes Gas den Temperaturfühler 11 mit der jeweils vorherrschenden Temperatur wenigstens teilweise beaufschlagt, so dass durch Gasaustritt oder Gaseintritt hervorgerufene Temperaturänderungen schnell und sicher durch den Temperaturfühler 11 erfasst werden können.

Wie der Darstellung nach Figur 1 entnommen werden kann, sind hier zwischen den vier Ebenen 14 drei Garebenen 25 vorgesehen. Dabei ist in Figur 1 an zwei Garebenen 25 jeweils ein als Garblech ausgeführter Garbehälter 23 bzw. Gargutträger gestrichelt eingezeichnet.

Die Anordnung der Garebenen 25 ist derart, dass jede Garebene 25 jeweils von oben und unten mit Dampf 9 der einen Dampfquelle 3 oder mehrerer Dampfquellen 3 beaufschlagbar ist. Dabei wird die unterste Garebene 25 durch Dampf aus den untersten vier Dampfeinlassöffnungen 4 beaufschlagt.

Jeder Garbehälter 23 ist hier etwa wannenförmig ausgebildet und weist einen Aufnahmerand 24 auf, der auf Haltern 28 des Garraumes 2 aufliegt. Die Halter 28 definieren die Garebenen und stützen die Garbehälter 23 nach unten ab. Durch den Aufnahmerand 24 des Garbehälters 23 und die Anordnung der Dampfeinlassöffnungen 4 wird es erreicht, dass in den Garraum 2 eintretender Dampf 9 durch die zwischen dem Garbehälter 23 und den Wandungen 54 des Garraums 2 gebildeten Führungskanäle bzw. Dampfkanäle 51 geleitet wird. Der hinten an der Rückwand 13 aus der Baueinheit 10 austretende Dampf wird an der Rückwand 13 entlang geleitet und entlang der Seitenwände bis zum vorderen Ende des Garraumes 2 geführt, wo er vorne um den Garbehälter 23 herumtritt und schließlich in erheblichem Maße von vorn auf das Gargut 21 geleitet wird. Zum Schluss erreicht die Strömung hier die Auslassöffnung 8, so dass hier sichergestellt wird, dass das kälteste Gas aus dem Garraum 2 abgeleitet wird.

Auf der obersten Garebene 25 ist schematisch eine zu garende Speise bzw. ein Gargut 21 dargestellt.

Das in Figur 1 dargestellte Gargerät 1 ist mit einer Steuereinrichtung 30, mit Bedienknöpfen 46 und einer Anzeige 47 ausgerüstet, um den Betriebszustand und/oder das Geräteprogramm und weitere Informationen auszugeben. Die Dampfquelle 3 bzw. die Dampfquellen 3 sind über eine oder mehrere Dampfleitungen 29 mit den jeweiligen Dampfeinlassöffnungen 4 verbunden.

Die einzelnen Dampfeinlassöffnungen 4 sind hier jeweils als Dampfdüse 18 ausgebildet, um die Strömungsgeschwindigkeit des aus den Dampfeinlassungen 4 ausgegebenen Dampfs 9 zu erhöhen und damit die Durchmischung mit der Garraumatmosphäre zu verbessern.

Die oberen sechs Dampfeinlassöffnungen sind über eine gemeinsame Dampfführung 22 miteinander verbunden. Die unteren beiden und die sechs oberen Dampfeinlassöffnungen 4 können separat ansteuerbar sein.

Zum Beginn eines Garprozesses werden hier alle Einlassöffnungen 4 mit maximal vorgesehener Dampfleistung beaufschlagt. Im weiteren Prozess wird die zugeführte Dampfleistung reduziert. Schließlich wird nur durch die unteren Dampfeinlassöffnungen 4 Dampf in den Garraum 2 eingeleitet. Im unteren Bereich ist auch die Auslassöffnung 8 vorgesehen.

Wenn nur durch die untersten Dampfeinlassöffnungen 4 Dampf 9 eingeleitet wird, so wird dieser heiße Dampf automatisch in die oberen Bereiche des Garraums 2 geleitet, da heißer Dampf leichter ist. Die im unteren Bereich vorgesehene Auslassöffnung 8 wiederum führt im Wesentlichen die kühlste im Garraum vorhandene Atmosphäre nach außen ab.

Zur Beleuchtung des Garraums 2 und/oder der Baueinheit 10 kann eine Leuchtquelle 20 in dem Garraum 2 und insbesondere in der Baueinheit 10 integriert sein.

Figur 3 zeigt einen stark schematischen Querschnitt durch das Gargerät 1 nach Figur 1. Deutlich zu erkennen ist die an der Rückwand 13 des Garraums angeordnete Baueinheit 10.

Die Austrittsöffnungen der seitlich ausstrahlenden Dampfeinlassöffnungen 4 sind in der Darstellung gemäß Figur 3 gut zu erkennen.

Im unteren Bereich des Garraums 2 ist die Auslassöffnung 8 angeordnet, so wie es schon den Figuren 1 und 2 zu entnehmen war. Der Temperaturfühler 11 ist hier zentrisch in oder an der Auslassöffnung 8 angeordnet.

Wie es in Figur 3 gestrichelt dargestellt ist, kann der Temperaturfühler 11 auch (vollständig) innerhalb des Garraums 2 oder (vollständig) außerhalb des Garraums 2 in beispielsweise dem Zwischenraum 44 angeordnet werden. Der Temperaturfühler 11 ist dabei innerhalb des Strömungsweges 42 des Gasstroms 43 durch die Auslassöffnung 8 angeordnet. Dadurch, dass der Temperaturfühler 11 innerhalb des Strömungsweges 42 angeordnet ist, wird der Temperaturfühler 11 in jedem Fall mit dem durch die Auslassöffnung 8 durchtretenden Gasstrom 43 beaufschlagt.

Wenn dieser Gasstrom 43 beispielsweise bei Austritt von Dampfüberschuss eine erhöhte Temperatur oder bei Lufteintritt von außen eine niedrigere Temperatur als die Garraumtemperatur aufweist, so registriert der Temperaturfühler 11 solche Temperaturänderungen direkt. Dadurch wird eine erheblich feinere Steuerung der Heizleistung und somit der Garraumtemperatur ermöglicht. Das "Atmen" des Garraumes wird weitestgehend vermieden. In Versuchen hat sich herausgestellt, dass zeitliche und örtliche Temperaturunterschiede innerhalb des Garraumes 2 weitestgehend vermieden und gegebenenfalls sogar nicht mehr erfasst werden. Optisch unschöne Verfärbungen auf Lebensmitteln werden vermieden.

Zum Austritt und zum Gasaustausch mit der Umgebung 50 sind Öffnungen 55 in dem Zwischenraum 44 vorgesehen.

In Figur 4 ist ein stark schematischer Querschnitt durch den Garraum 2 eines Gargeräts 1 bzw. Dampfgargerätes 100 etwa in Höhe der Dampfauslassöffnungen 4 kurz oberhalb der obersten Garebene 25 aus Figur 1 dargestellt.

Die Dampfauslassöffnungen 4 sind an der Baueinheit 10 am rückwärtigen Ende des Garraumes 2 angeordnet und weisen, wie hier im Querschnitt erkennbar, Verengungen 52 am Austrittsquerschnitt auf, so dass die Dampfströmung beim Austritt aus den Dampfeinlassöffnungen 4 beschleunigt wird. Dabei wirken die Dampfeinlassöffnungen 4 als Dampfdüsen 18. Dadurch wird eine besonders intensive Vermischung des durch die Dampfeinlassöffnungen 4 in den Garraum 2 eintretenden Dampfes 9 mit der dort vorherrschenden Atmosphäre erzielt. Auch die anderen Dampfeinlassöffnungen 4 sind hier entsprechend ausgebildet.

Die Dampfströmung 53, die aus den Dampfeinlassöffnungen 4 in den Garraum 2 eintritt, wird etwa tangential, d. h. etwa parallel zur Rückwand 13 in den Garraum 2 eingeblasen, wobei ein leichter Winkel zur Rückwand 13 vorliegen kann. Die Rückwand bildet hier eine Wandung 54, an der der Dampfstrom entlang geführt wird. Zusammen mit dem Garbehälter 23 bilden die Rückwand 13 und die seitlichen Wandungen 54 Dampfkanäle 51, durch die der eintretende Dampf 9 hier geleitet wird. Insgesamt ergibt sich in starker Näherung ein Strömungsverhalten, wie es durch die mit Pfeilen gekennzeichnete Dampfströmung 53 eingezeichnet ist. Die Dampfströmung 53 nimmt dabei den Weg an der hinteren Rückwand entlang bis zur Seitenwand, von dort bis zum vorderen Ende des Garraumes, wird dort wiederum umgelenkt und gelangt über die Garebene 25 wieder zurück zur Rückwand 13.

Durch diese Anordnung wird für eine homogene Verteilung des Dampfes 9 innerhalb des Garraumes 2 gesorgt, insbesondere da der Dampf 9 insbesondere zu Beginn des Garvorganges nicht nur über die oberen Dampfeinlassöffnungen 4, sondern über alle Dampfeinlassöffnungen 4 in den Garraum 2 eingeleitet wird.

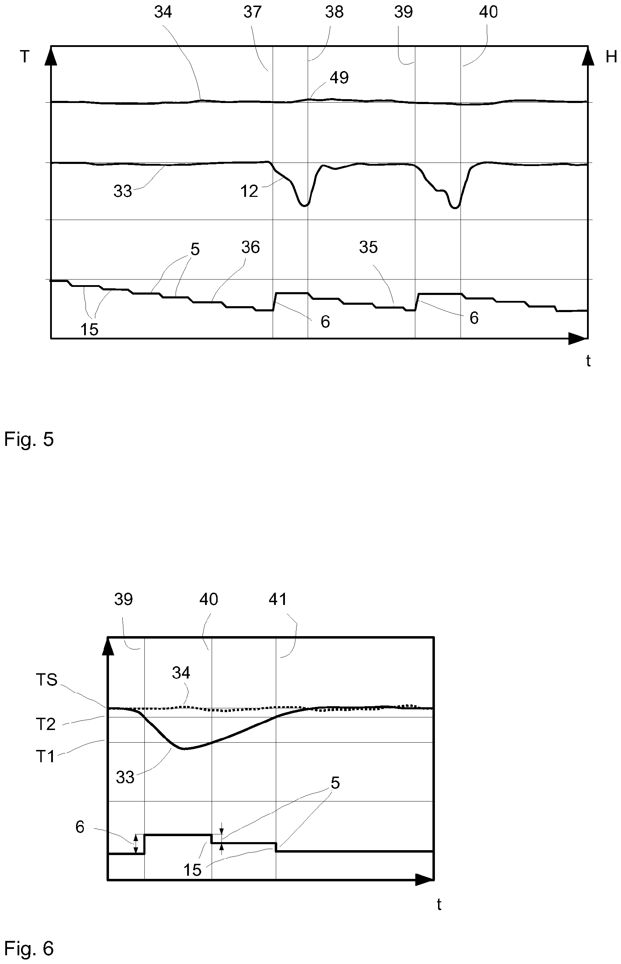

Figur 5 zeigt den zeitlichen Temperaturverlauf 34 im Garraum 2 und den Temperaturverlauf 33 der mit dem Temperaturfühler 11 erfassten Temperaturen 12. Zusätzlich ist in dem Diagramm in Figur 5 noch der zeitliche Verlauf 35 der Heizleistung 36 dargestellt.

Je nach Anordnung des Temperaturfühlers 11 erfasst der Temperaturfühler 11 eine Temperatur 12, die sich von der aktuellen Garraumtemperatur 49 unterscheidet. Das kann beispielsweise dadurch bedingt sein, dass der Temperaturfühler 11 knapp außerhalb des Garraums 2 an der Auslassöffnung 8 angeordnet ist. Dadurch, dass der Temperaturfühler 11 mit dem Garraum 2 in Strömungsverbindung steht und nahe an dem Garraum 2 angeordnet ist, wird die von dem Temperaturfühler 11 erfasste Temperatur 12 relativ nahe an der Garraumtemperatur 49 liegen, aber typischerweise unterhalb der Garraumtemperatur 49.

In dem dargestellten kurzen Abschnitt eines Garprozesses wird zunächst mit relativ hoher Heizleistung 36 geheizt. Nachfolgend wird die Heizleistung 36 in mehreren Stufen 15 um jeweils ein erstes Maß 5 reduziert. Wenn schließlich zu einem Zeitpunkt 37 die von dem Temperaturfühler 11 erfasste Temperatur 12 absinkt, wird die Heizleistung um ein zweites Maß 6 erhöht, welches hier ein Mehrfaches des ersten Maßes 5 beträgt. Beispielsweise kann das erste Maß der Verringerung der Heizleistung in 30, 40 oder auch 50 Watt-Schritten erfolgen, während das zweite

Maß zur Erhöhung der Heizleistung in Schritten von 90, 120 oder 150 Watt oder dergleichen erfolgt. Nach einer gewissen Zeit hat die Dampfquelle die Dampfproduktion derart erhöht, dass die mit dem Temperaturfühler 11 erfasste Temperatur 12 wieder ansteigt. Zu diesem Zeitpunkt 38 kann die Heizleistung stufenweise wieder reduziert werden, bis die von dem Temperaturfühler erfasste Temperatur 12 schließlich wieder sinkt. Zu diesem Zeitpunkt 39 wird die Heizleistung um ein zweites Maß 6 erhöht, bis zu einem Zeitpunkt 40 die Heizleistung wieder stufenweise reduziert werden kann.

Gleichzeitig wird aus dem Diagramm aus Figur 5 deutlich, dass die Garraumtemperatur 49 sich nur unwesentlich im dargestellten Zeitraum verändert. Temperaturschwankungen in zeitlicher und örtlicher Hinsicht im Garraum unterhalb von 2°C, 1°C und sogar unterhalb von 0,5°C sind möglich.

Dadurch kann die Solltemperatur im Garraum beispielsweise von 90°C auf 98°C erhöht werden. Gleichzeitig wird die Überstimmung der vorgegebenen Garraumtemperatur mit der tatsächlichen Garraumtemperatur 49 erheblich verbessert, so dass das Garergebnis besser den voreingestellten Bedingungen entspricht und reproduzierbarer wird. Außerdem verkürzt sich die Garzeit durch die höhere Gartemperatur.

Durch die Anpassung der Veränderung der Heizleistung in Abhängigkeit von der erfassten Temperatur 12 des Temperaturfühlers 11 wird ein erheblich konstanteres und reproduzierbares Ergebnis erzielt.

Figur 6 zeigt in einer schematischen Darstellung einen vergrößerten kleineren Zeitabschnitt eines Garprozesses, bei dem zu einem Zeitpunkt 39 beispielsweise eine zweite Schwelltemperatur T2 unterschritten wird. Dadurch wird mittels der Steuereinrichtung 30 die Heizleistung 36 um ein zweites Maß 6 erhöht. Das zweite Maß 6 entspricht hier dem Doppelten des ersten Maßes 5. Der Temperaturverlauf der erfassten Temperatur 12 des Temperaturfühlers 11 zeigt nach dem Durchlaufen eines Minimums einen Anstieg an und erreicht die erste Temperaturschwelle T1 zu einem Zeitpunkt 40. Dies dient hier als Signal zur Verringerung der Heizleistung um ein erstes - geringeres - Maß 5. Die Verringerung erfolgt hier stufenweise in Stufen 15. Zwei Stufen 15 mit jeweils einem ersten Maß 5 entsprechen hier dem zweiten Maß 6.

Im dargestellten Beispiel wird bei Erreichen der zweiten Schwelltemperatur T2 von unten zum Zeitpunkt 41 die Heizleistung um eine weitere Stufe 15 reduziert. Wie dargestellt, ergibt sich eine gute Übereinstimmung der Solltemperatur TS mit dem Temperaturverlauf 34 im Garraum 2.

Insgesamt stellt die Erfindung ein vorteilhaftes Gargerät und ein vorteilhaftes Verfahren zum Betreiben eines Gargerätes zur Verfügung. Mit einfachen Mitteln wird eine hohe Genauigkeit der vorgegebenen Garraumtemperatur erzielt. Bei Anordnung des Temperaturfühlers im Bereich der Auslassöffnung 8 aus dem Garraum wird eine hohe Sensitivität erzielt, so dass eine im Vergleich zum Stand der Technik deutliche Erhöhung der maximalen Garraumbetriebstemperatur möglich ist, was eine Verringerung der Garraumzeiten ermöglicht, während gleichzeitig das "Atmen" des Garraums 2 vermieden wird. Austretender überschüssiger Dampf wird weitgehend reduziert, was auch der Energiebilanz zuträglich ist.

Die abgegebene Leistung kann sehr feinstufig auf die aktuell benötigte Heizleistung eingestellt werden, so dass ein energieoptimales Gerät ermöglicht wird.

Durch die Erhöhung der Gartemperatur von z. B. 90°C auf 98°C ergibt sich eine Reduktion der Garzeit, die je nach eingebrachter Menge 10 %, 20 % oder 30 % oder mehr betragen kann.

Die erzielte Regelungsgenauigkeit wird sowohl bei internen Dampfquellen als auch bei externen Dampfquellen ermöglicht.

### Bezugszeichenliste

- 1: Gargerät
- 2: Garraum
- 3: Dampfquelle
- 4: Dampfeinlassöffnung
- 5: erstes Maß
- 6: zweites Maß
- 8: Auslassöffnung, Dampfauslassöffnung
- 9: Dampf
- 10: Baueinheit
- 11: Temperaturfühler
- 12: Temperatur
- 13: Rückwand
- 14: Ebene
- 15: Stufe
- 16: Garraumtemperatur
- 18: Dampfdüse
- 20: Leuchtquelle
- 21: Speise, Gargut
- 22: Dampfführung
- 23: Garbehälter, Garblech
- 24: Aufnahmerand
- 25: Garebene
- 28: Halter
- 29: Dampfleitung
- 30: Steuereinrichtung
- 31: Sensoreinrichtung
- 33: Temperaturverlauf
- 34: Temperaturverlauf im Garraum
- 35: Verlauf der Heizleistung
- 36: Heizleistung
- 37: erster Zeitpunkt
- 38: zweiter Zeitpunkt
- 39: dritter Zeitpunkt
- 40: vierter Zeitpunkt
- 41: fünfter Zeitpunkt
- 42: Strömungsweg
- 43: Gasstrom
- 44: Zwischenraum
- 45: Strahlrichtung
- 46: Bedienknopf
- 47: Anzeige
- 49: Gartemperatur
- 50: Umgebung
- 51: Dampfkanal
- 52: Verengung
- 53: Dampfströmung
- 54: Wandung
- 55: Öffnung
- 100: Dampfgargerät
- TS: Solltemperatur
- T1: erste Schwelltemperatur
- T2: zweite Schwelltemperatur

## Patentansprüche

1. Gargerät (1) mit wenigstens einem Garraum (2), der über wenigstens eine dem Garraum (2) zugeordnete Dampfquelle (3) beheizbar ist,
wobei an dem Garraum (2) wenigstens eine Auslassöffnung (8) mit einem Strömungsweg (42) vorgesehen ist, wodurch Dampf aus dem Garraum (2) nach außen entweichen kann und Luft aus der Umgebung (50) in den Garraum (2) eintreten kann,
wobei ein Temperaturfühler (11) zur Erfassung einer Temperatur (12) im Strömungsweg (42) des durch die Auslassöffnung (8) des Garraumes (2) durchtretenden Gasstroms angeordnet ist,
und wobei wenigstens eine Steuereinrichtung (30) zur Steuerung der Dampfquelle (3) in Abhängigkeit von der Temperatur des Temperaturfühlers (11) vorgesehen ist, wobei die Steuereinrichtung (30) dazu geeignet und ausgebildet ist, eine Heizleistung (36) der Dampfquelle (3) in Abhängigkeit von der Temperatur (12) des Temperaturfühlers (11) zu verändern,
wobei die Steuereinrichtung (30) dazu eingerichtet und ausgebildet ist, die Heizleistung (36) der Dampfquelle (3) um ein erstes Maß (5) zu verringern, wenn die von dem Temperaturfühler (11) erfasste Temperatur (12) eine vorgegebene erste Schwelltemperatur (T1) überschreitet,
und wobei die Steuereinrichtung (30) dazu eingerichtet und ausgebildet ist, die Heizleistung (36) der Dampfquelle (3) um ein zweites Maß (6) zu erhöhen, wenn die von dem Temperaturfühler (11) erfasste Temperatur (12) eine vorgegebene zweite Schwelltemperatur (T2) unterschreitet,
**dadurch gekennzeichnet, dass**
die Steuereinrichtung (30) dazu eingerichtet und ausgebildet ist, die Heizleistung (36) der Dampfquelle (3) zunächst um das erste Maß (5) zu verringern und anschließend die Heizleistung (36) der Dampfquelle (3) um das zweite Maß (6) zu erhöhen,
wobei das zweite Maß (6) größer als das erste Maß (5) ist.

2. Gargerät (1) nach Anspruch 1, **dadurch gekennzeichnet, dass** das zweite Maß (6) um ein Vielfaches größer als das erste Maß (5) ist.

3. Gargerät (1) nach einem der vorhergehenden Ansprüche, **dadurch gekennzeichnet, dass** die Steuereinrichtung (30) dazu eingerichtet und ausgebildet ist, die Heizleistung (36) der Dampfquelle (3) stufenweise und/oder stufenlos zu verändern.

4. Gargerät (1) nach einem der vorhergehenden Ansprüche, **dadurch gekennzeichnet, dass** an dem Garraum (2) wenigstens eine Auslassöffnung (8) vorgesehen ist, über welche der Garraum (2) mit der Umgebung (50) in Verbindung steht.

5. Gargerät (1) nach einem der beiden vorhergehenden Ansprüche, **dadurch gekennzeichnet, dass** der Temperaturfühler (11) an der Auslassöffnung (8) angeordnet ist.

6. Gargerät (1) nach einem der drei vorhergehenden Ansprüche, **dadurch gekennzeichnet, dass** der Temperaturfühler (11) in der Auslassöffnung (8) angeordnet ist.

7. Gargerät (1) nach einem der vorhergehenden Ansprüche, **dadurch gekennzeichnet, dass** der Temperaturfühler (11) außerhalb oder innerhalb des Garraumes (2) angeordnet ist.

8. Gargerät (1) nach einem der vorhergehenden Ansprüche 4 bis 7, **dadurch gekennzeichnet, dass** eine gemeinsame Baueinheit (10) vorgesehen ist, an der der Temperaturfühler (11) und die Auslassöffnung (8) vorgesehen sind.

9. Gargerät (1) nach dem vorhergehenden Anspruch, **dadurch gekennzeichnet, dass** an der gemeinsamen Baueinheit (10) wenigstens eine Dampfeinlassöffnung (4) vorgesehen ist.

10. Verfahren zum Betreiben eines Gargerätes (1) gemäß einem der Ansprüche 1-9, mit wenigstens einem Garraum (2), der über wenigstens eine dem Garraum (2) zugeordnete Dampfquelle (3) beheizbar ist,
wobei an dem Garraum (2) wenigstens eine Auslassöffnung (8) mit einem Strömungsweg (42) vorgesehen ist, wodurch Dampf aus dem Garraum (2) nach außen entweichen kann und Luft aus der Umgebung (50) in den Garraum (2) eintreten kann,
wobei ein Temperaturfühler (11) im Strömungsweg (42) des durch die Auslassöffnung (8) des Garraumes (2) durchtretenden Gasstroms eine Temperatur (12) erfasst,
und wobei eine Steuereinrichtung (30) die Dampfquelle (3) in Abhängigkeit von der Temperatur des Temperaturfühlers (11) steuert,
und eine Heizleistung (36) der Dampfquelle (3) in Abhängigkeit von der Temperatur (12) des Temperaturfühlers (11) verändert,
wobei die Steuereinrichtung (30) zunächst die Heizleistung (36) der Dampfquelle (3) um ein erstes Maß (5) verringert, wenn die Temperatur (12) des Temperaturfühlers (11) eine vorgegebene erste Schwelltemperatur (T1) übersteigt und anschließend die Heizleistung (36) der Dampfquelle (3) um ein gegenüber dem ersten Maß (5) unterschiedliches zweites Maß (6) erhöht, wenn die Temperatur (12) des Temperaturfühlers (11) eine vorgegebene zweite Schwelltemperatur (T2) unterschreitet
**dadurch gekennzeichnet, dass**
die Steuereinrichtung (30) die Heizleistung (36) der Dampfquelle (3) zunächst um das erste Maß (5) verringert und anschließend die Heizleistung (36) der Dampfquelle (3) um das zweite Maß (6) erhöht,
wobei das zweite Maß (6) größer als das erste Maß (5) ist.

11. Verfahren nach dem vorhergehenden Anspruch, wobei das zweite Maß (6) um ein Vielfaches größer als das erste Maß (5) ist.

12. Verfahren nach dem vorhergehenden Anspruch, wobei die Steuereinrichtung (30) die Heizleistung (36) der Dampfquelle (3) stufenweise verändert.

13. Verfahren nach dem vorhergehenden Anspruch, wobei die Steuereinrichtung (30) bei Erhöhung der Heizleistung der Dampfquelle (3) die Heizleistung der Dampfquelle (3) um wenigstens eine Stufe mehr erhöht als die Steuereinrichtung (30) die Heizleistung der Dampfquelle (3) bei der Verringerung verringert.

14. Verfahren nach dem vorhergehenden Anspruch, wobei in der Steuereinrichtung (30) mehrere Schwelltemperaturen (T1, T2) vorgesehen sind, bei denen jeweils unterschiedliche Erhöhungen oder Verringerungen der Heizleistung vorgenommen werden.

15. Verfahren nach zumindest einem der Ansprüche 11 oder 12, wobei die Steuereinrichtung (30) die Heizleistung (36) der Dampfquelle (3) stufenlos verändert.

## Claims

1. Cooking appliance (1) comprising at least one cooking chamber (2) which is heatable by means of a steam source (3) associated with the cooking chamber (2), at least one outlet opening (8) comprising a flow path (42) being provided at the cooking chamber (2), as a result of which steam is able to escape from the cooking chamber (2) to the outside and air is able to enter into the cooking chamber (2) from the surroundings (50), a temperature sensor (11) being arranged for detecting a temperature (12) in the flow path (42) of the gas flow passing through the outlet opening (8) of the cooking chamber (2), and at least one control device (30) being provided for controlling the steam source (3) depending on the temperature of the temperature sensor (11), the control device (30) being suitable and designed for changing a heat output (36) of the steam source (3) depending on the temperature (12) of the temperature sensor (11), the control device (30) being configured and designed to decrease the heat output (36) of the steam source (3) by a first amount (5) when the temperature (12) detected by the temperature sensor (11) exceeds a predetermined first threshold temperature (T1), and the control device (30) being configured and designed to increase the heat output (36) of the steam source (3) by a second amount (6) when the temperature (12) detected by the temperature sensor (11) falls below a predetermined second threshold temperature (T2), **characterised in that** the control device (30) is configured and designed to initially decrease the heat output (36) of the steam source (3) by the first amount (5) and to subsequently increase the heat output (36) of the steam source (3) by the second amount (6), the second amount (6) being greater than the first amount (5).

2. Cooking appliance (1) according to claim 1, **characterised in that** the second amount (6) is many times greater than the first amount (5).

3. Cooking appliance (1) according to either of the preceding claims, **characterised in that** the control device (30) is configured and designed to change the heat output (36) of the steam source (3) in steps and/or continuously.

4. Cooking appliance (1) according to any of the preceding claims, **characterised in that** at least one outlet opening (8) is provided at the cooking chamber (2), by means of which the cooking chamber (2) is connected to the surroundings (50).

5. Cooking appliance (1) according to either of the two preceding claims, **characterised in that** the temperature sensor (11) is arranged at the outlet opening (8).

6. Cooking appliance (1) according to any of the three preceding claims, **characterised in that** the temperature sensor (11) is arranged in the outlet opening (8).

7. Cooking appliance (1) according to any of the preceding claims, **characterised in that** the temperature sensor (11) is arranged outside or inside the cooking chamber (2).

8. Cooking appliance (1) according to any of the preceding claims 4 to 7, **characterised in that** a common modular unit (10) is provided, at which the temperature sensor (11) and the outlet opening (8) are provided.

9. Cooking appliance (1) according to the preceding claim, **characterised in that** at least one steam inlet opening (4) is provided at the common modular unit (10).

10. Method for operating a cooking appliance (1) according to any of claims 1-9, comprising at least one cooking chamber (2) which is heatable by means of at least one steam source (3) associated with the cooking chamber (2), at least one outlet opening (8) comprising a flow path (42) being provided at the cooking chamber (2), as a result of which steam is able to escape from the cooking chamber (2) to the outside and air is able to enter into the cooking chamber (2) from the surroundings (50), a temperature sensor (11) detecting a temperature (12) in the flow path (42) of the gas flow passing through the outlet opening (8) of the cooking chamber (2), and a control device (30) controlling the steam source (3) depending on the temperature of the temperature sensor (11), and changing a heat output (36) of the steam source (3) depending on the temperature (12) of the temperature sensor (11), the control device (30) initially decreasing the heat output (36) of the steam source (3) by a first amount (5) when the temperature (12) of the temperature sensor (11) exceeds a predetermined first threshold temperature (T1) and subsequently increasing the heat output (36) of the steam source (3) by a second amount (6) different to the first amount (5) when the temperature (12) of the temperature sensor (11) falls below a predetermined second threshold temperature (T2), **characterised in that** the control device (30) initially reduces the heat output (36) of the steam source (3) by the first amount (5) and subsequently increases the heat output (36) of the steam source (3) by the second amount (6), the second amount (6) being greater than the first amount (5).

11. Method according to the preceding claim, wherein the second amount (6) is many times greater than the first amount (5).

12. Method according to the preceding claim, wherein the control device (30) changes the heat output (36) of the steam source (3) in steps.

13. Method according to the preceding claim, wherein the control device (30), when increasing the heat output of the steam source (3), increases the heat output of the steam source (3) by at least one step more than the control device (30) decreases the heat output of the steam source (3) when decreasing.

14. Method according to the preceding claim, wherein a plurality of threshold temperatures (T1, T2) are provided in the control device (30), at each of which different increases or decreases in the heat output are carried out.

15. Method according to at least one of claim 11 or claim 12, wherein the control device (30) changes the heat output (36) of the steam source (3) continuously.

## Revendications

1. Appareil de cuisson (1) comportant au moins une chambre de cuisson (2) pouvant être chauffée par l'intermédiaire d'au moins une source de vapeur (3) associée à la chambre de cuisson (2),
au moins une ouverture de sortie (8) comportant un chemin d'écoulement (42) étant prévue au niveau de la chambre de cuisson (2), lequel chemin d'écoulement permet l'échappement de la vapeur de la chambre de cuisson (2) vers l'extérieur et l'entrée de l'air provenant de l'environnement (50) dans la chambre de cuisson (2),
un capteur de température (11) étant prévu pour détecter une température (12) dans le chemin d'écoulement (42) du flux gazeux traversant l'ouverture de sortie (8) de la chambre de cuisson (2),
et au moins un dispositif de commande (30) étant prévu pour commander la source de vapeur (3) en fonction de la température du capteur de température (11), le dispositif de commande (30) étant adapté et conçu pour modifier une puissance de chauffage (36) de la source de vapeur (3) en fonction de la température (12) du capteur de température (11),
le dispositif de commande (30) étant configuré et conçu pour réduire une première mesure (5) de la puissance de chauffage (36) de la source de vapeur (3) lorsque la température (12) détectée par le capteur de température (11) dépasse une première température seuil prédéfinie (T1),
et le dispositif de commande (30) étant configuré et conçu pour augmenter la puissance de chauffage (36) de la source de vapeur (3) d'une seconde mesure (6) lorsque la température (12) détectée par le capteur de température (11) est inférieure à une seconde température seuil prédéfinie (T2),
**caractérisé en ce que**
le dispositif de commande (30) est configuré et conçu d'abord pour réduire la puissance de chauffage (36) de la source de vapeur (3) de la première mesure (5), puis pour augmenter la puissance de chauffage (36) de la source de vapeur (3) de la seconde mesure (6), la seconde mesure (6) étant supérieure à la première mesure (5).

2. Appareil de cuisson (1) selon la revendication 1, **caractérisé en ce que** la seconde mesure (6) est plusieurs fois supérieure à la première mesure (5).

3. Appareil de cuisson (1) selon l'une des revendications précédentes, **caractérisé en ce que** le dispositif de commande (30) est configuré et conçu pour modifier la puissance de chauffage (36) de la source de vapeur (3) de manière progressive et/ou continue.

4. Appareil de cuisson (1) selon l'une des revendications précédentes, **caractérisé en ce qu'**au moins une ouverture de sortie (8), par l'intermédiaire de laquelle la chambre de cuisson (2) est en communication avec l'environnement (50), est prévue au niveau de la chambre de cuisson (2).

5. Appareil de cuisson (1) selon l'une des deux revendications précédentes, **caractérisé en ce que** le capteur de température (11) est prévu au niveau de l'ouverture de sortie (8).

6. Appareil de cuisson (1) selon l'une des trois revendications précédentes, **caractérisé en ce que** le capteur de température (11) est prévu dans l'ouverture de sortie (8).

7. Appareil de cuisson (1) selon l'une des revendications précédentes, **caractérisé en ce que** le capteur de température (11) est disposé à l'extérieur ou à l'intérieur de la chambre de cuisson (2).

8. Appareil de cuisson (1) selon l'une des revendications 4 à 7 précédentes, **caractérisé en ce qu'**un module commun (10) est prévu, au niveau duquel le capteur de température (11) et la sortie (8) sont prévus.

9. Appareil de cuisson (1) selon la revendication précédente, **caractérisé en ce qu'**au moins une ouverture d'entrée de vapeur (4) est prévue au niveau du module commun (10).

10. Procédé permettant de faire fonctionner un appareil de cuisson (1) selon l'une des revendications 1 à 9, comportant au moins une chambre de cuisson (2) pouvant être chauffée par l'intermédiaire d'au moins une source de vapeur (3) associée à la chambre de cuisson (2),
au moins une ouverture de sortie (8) comportant un chemin d'écoulement (42) étant prévue au niveau de la chambre de cuisson (2), lequel chemin d'écoulement permet l'échappement de la vapeur de la chambre de cuisson (2) vers l'extérieur et l'entrée de l'air provenant de l'environnement (50) dans la chambre de cuisson (2),
un capteur de température (11) détectant une température (12) dans le chemin d'écoulement (42) du flux de gaz traversant l'ouverture de sortie (8) de la chambre de cuisson (2),
et un dispositif de commande (30) commandant la source de vapeur (3) en fonction de la température du capteur de température (11), et modifiant une puissance de chauffage (36) de la source de vapeur (3) en fonction de la température (12) du capteur de température (11),
le dispositif de commande (30) réduisant d'abord la puissance de chauffage (36) de la source de vapeur (3) d'une première mesure (5) lorsque la température (12) du capteur de température (11) dépasse une première température seuil prédéfinie (T1), puis augmentant la puissance de chauffage (36) de la source de vapeur (3) d'une seconde mesure (6) différente de la première mesure (5) lorsque la température (12) du capteur de température (11) est inférieure à une seconde température seuil prédéfinie (T2),
**caractérisé en ce que**
le dispositif de commande (30) réduit d'abord la puissance de chauffage (36) de la source de vapeur (3) de la première mesure (5), puis augmente la puissance de chauffage (36) de la source de vapeur (3) de la seconde mesure (6),
la seconde mesure (6) étant supérieure à la première mesure (5).

11. Procédé selon la revendication précédente, dans lequel la seconde mesure (6) est plusieurs fois supérieure à la première mesure (5).

12. Procédé selon la revendication précédente, dans lequel le dispositif de commande (30) modifie progressivement la puissance de chauffage (36) de la source de vapeur (3).

13. Procédé selon la revendication précédente, dans lequel le dispositif de commande (30) augmente la puissance de chauffage de la source de vapeur (3) d'au moins un niveau de plus en matière d'augmentation de la puissance de chauffage de la source de vapeur (3) par rapport au cas où le dispositif de commande (30) réduit la puissance de chauffage de la source de vapeur (3) en matière de réduction.

14. Procédé selon la revendication précédente, dans lequel une pluralité de températures seuil (T1, T2), auxquelles différentes augmentations ou réductions de la puissance de chauffage sont respectivement appliquées, sont prévues dans le dispositif de commande (30).

15. Procédé selon au moins l'une des revendications 11 ou 12, dans lequel le dispositif de commande (30) modifie la puissance de chauffage (36) de la source de vapeur (3) en continu.
